# EUROPEAN PATENT APPLICATION

(11) **EP 4 755 687 A1**
(43) Date of publication of application: **10.06.2026**
(21) Application number: 25220060.5
(22) Date of filing: 02.12.2025
(51) Int. Cl.: B60K 35/10, B60K 35/22, B60K 35/29, B60K 35/81

(54) **IN-VEHICLE SYSTEM, VEHICLE, AND INFORMATION PROCESSING APPARATUS**

(30) Priority: 03.12.2024 JP 2024210598
(71) Applicant: Toyota Jidosha Kabushiki Kaisha, Toyota-shi, Aichi-ken 471-8571 (JP)
(72) Inventor: TANAKA, Seiichi, Toyota-shi, 471-8571 (JP); FUJIWARA, Tatsuro, Toyota-shi, 471-8571 (JP); TSUJINO, Miki, Toyota-shi, 471-8571 (JP); ONISHI, Kanta, Toyota-shi, 471-8571 (JP); KOBATAKE, Yasuhiro, Toyota-shi, 471-8571 (JP); YOKOYAMA, Yuu, Toyota-shi, 471-8571 (JP)
(74) Representative: D Young & Co LLP

(57) **Abstract**

An in-vehicle system includes a first display module (21) disposed in front of a steering wheel (4) of a vehicle (1) and on a front side of the vehicle (1), a second display module (22) disposed on a side of the steering wheel (4) and on an inner side of the vehicle (1), and a third display module (23) disposed on a side of the steering wheel (4) and on an outer side of the vehicle (1), wherein under a first situation, independent display control is performed on the first display module (21), the second display module (22), and the third display module (23), whereas under a second situation in which a notification with a priority equal to or higher than a predetermined value is generated for an occupant of the vehicle (1), display control related to the notification is performed by a virtual screen disposed across the first display module (21), the second display module (22), and the third display module (23).

## Description

### TECHNICAL FIELD

The present disclosure relates to a vehicle technology.

### BACKGROUND ART

There are technologies that provide information to reduce the burden on drivers who drive automobiles. In this connection, for example, Patent Literature 1 discloses an in-vehicle system in which a display for providing information is disposed in the vicinity of a steering wheel.

### Citation List

### Patent Literature

Patent Literature 1: Japanese Patent No. 7306210
Patent Literature 2: Japanese Patent Application Laid-Open Publication No. 2019-206254

### SUMMARY OF INVENTION

### TECHNICAL PROBLEM

The object of the present disclosure is to reliably transmit information to a driver.

### SOLUTION TO PROBLEM

One aspect of the present disclosure is directed to an in-vehicle system including: a storage module configured to store an image corresponding to a notification with a priority equal to or higher than a predetermined value among a plurality of notifications generated in a vehicle, the image including a first region, a second region, and a third region; a first display module disposed in front of a steering wheel of the vehicle and on a vehicle front side; a second display module disposed on a side of the steering wheel and closer to an inner side of the vehicle; a third display module disposed on a side of the steering wheel and closer to an outer side of the vehicle; and an information processing apparatus having a controller configured to execute: outputting, under a first situation, different information about the vehicle to the first display module, the second display module, and the third display module, respectively; and outputting, under a second situation in which a notification with a priority equal to or higher than the predetermined value is generated for an occupant of the vehicle, the first region of an image corresponding to the notification to the first display module, the second region thereof to the second display module, and the third region thereof to the third display module, respectively.

Another aspect of the present disclosure is directed to an in-vehicle system including: a first display module disposed in front of a steering wheel of the vehicle and on a vehicle front side; a second display module disposed on a side of the steering wheel and closer to an inner side of the vehicle; a third display module disposed on a side of the steering wheel and closer to an outer side of the vehicle; and an information processing apparatus having a controller configured to execute: performing, under a first situation, independent display control on the first display module, the second display module, and the third display module; and performing, under a second situation in which a notification with a priority equal to or higher than a predetermined value is generated for an occupant of the vehicle, display control related to the notification by a virtual screen disposed across the first display module, the second display module, and the third display module.

A further aspect of the present disclosure is directed to an information processing apparatus installed on a vehicle including a first display module disposed in front of a steering wheel and on a vehicle front side, a second display module disposed on a side of the steering wheel and closer to an inner side of the vehicle, and a third display module disposed on a side of the steering wheel and closer to an outer side of the vehicle, wherein the information processing apparatus having a controller is configured to execute: performing, under a first situation, independent display control on the first display module, the second display module, and the third display module; and performing, under a second situation in which a notification with a priority equal to or higher than a predetermined value is generated for an occupant of the vehicle, display control related to the notification by a virtual screen disposed across the first display module, the second display module, and the third display module.

In addition, other aspects of the present disclosure are directed to a vehicle equipped with the above-described in-vehicle system, an information processing method to be executed by the above-described information processing apparatus, a program for causing a computer to perform the information processing method, and a computer readable storage medium storing the program in a non-transitory manner.

### ADVANTAGEOUS EFFECTS OF INVENTION

According to the present disclosure, it is possible to transmit information to a driver in a reliable manner.

### BRIEF DESCRIPTION OF DRAWINGS

FIG. 1 is a view illustrating a passenger compartment in a vehicle 1 according to an embodiment;
FIG. 2 is an enlarged view of a steering wheel 4 and its surroundings;
FIG. 3 is a diagram illustrating an example of components of the vehicle 1;
FIG. 4 is a diagram illustrating an example of components of a vehicle ECU 10;
FIG. 5 is a diagram illustrating a list of screens output to an outer display;
FIG. 6 is a diagram illustrating an example of screens output to the outer display;
FIG. 7 is a diagram illustrating an example of screens output to the outer display;
FIG. 8 is a diagram illustrating a list of screens output to an inner display;
FIG. 9 is a diagram illustrating an example of screens output to the inner display;
FIG. 10 is a diagram illustrating an example of screens output to the inner display;
FIG. 11 is a diagram illustrating display contents of displays in a normal state;
FIG. 12 is a diagram illustrating display contents of the displays when a notification is generated.
FIG. 13 is an example of images corresponding respectively to notifications stored in a storage device;
FIG. 14 is a flowchart of a process to be executed by an HMI control module 1011; and
FIG. 15 is a view illustrating an example of a display device according to a modification.

### DESCRIPTION OF THE EMBODIMENTS

In recent years, as automobiles have become more sophisticated, the displays used to provide information are becoming larger, or the number of displays is increasing.

For example, a method has been proposed in which a large-sized touch panel display is disposed between a driver's seat and a front passenger seat in a front portion of a vehicle compartment, to collectively perform vehiclerelated operations and information provision. However, in such a method, the line of sight of the driver is significantly moved when operating the components included in the vehicle or checking the output information. For the driving safety of the vehicle, it is preferable to minimize the movement of the driver's line of sight.

In general, a display device such as a liquid crystal display or the like is often disposed in the area in front of the driver's seat where an instrument panel is conventionally located. By outputting information to the display device, the movement of the driver's line of sight can be minimized. However, the size of the display device disposed in front of the driver's seat is limited, and hence, it is not always possible to display all the pieces of information required by the driver. In addition, when these pieces of information are simultaneously output in the same area, for example, information necessary for driving the vehicle and auxiliary information such as entertainment will be mixed together, which will hinder intuitive information transmission.

In addition, there are also problems with the layout of the input interface for operation. For example, a steering wheel is known that has cursor keys and push button switches to enable input operations while driving. However, in such an input interface, the layout of buttons and the like is fixed, making it difficult to adapt to a plurality of different targets. For example, in a case where the set temperature of an air conditioner can be raised or lowered, it can be changed by using two physical keys, but it is not possible to directly specify any point on a map by using the physical keys. A form of operation by a touch panel could be considered, but as mentioned above, the touch panel display located in the front portion of the vehicle compartment is far from the steering wheel, so in addition to the movement of the driver's line of sight, the driver's hands also move significantly.

To solve these problems, an in-vehicle system has been devised in which a display device that allows input operations by touch is located in the vicinity of a steering wheel. For example, small displays with touch panels can be respectively disposed on the right and left sides of the steering wheel to enable intuitive and quick operations by the driver.

However, if the displays are disposed in the vicinity of the steering wheel, a plurality of displays will be disposed within the field of view of the driver, and thus there is a concern that a delay may occur in the transmission of information to the driver.

For example, consider a case in which some notification or warning (e.g., a request for handover from automatic driving to manual driving) is generated when the driver is operating a specific display among a plurality of displays. For example, if the driver is operating a display beside the steering wheel, a message displayed on the meter display may go unnoticed.

An in-vehicle system according to the present disclosure solves such a problem.

An in-vehicle system according to one aspect of the present disclosure includes a first display module disposed in front of a steering wheel of a vehicle and on a front side of the vehicle, a second display module disposed on a side of the steering wheel and closer to an inner side of the vehicle, a third display module disposed on a side of the steering wheel and closer to an outer side of the vehicle, and an information processing apparatus having a controller configured to execute: performing, under a first situation, independent display control on the first display module, the second display module, and the third display module; and performing, under a second situation in which a notification with a priority equal to or higher than a predetermined value is generated for an occupant of the vehicle, display control related to the notification by a virtual screen disposed across the first display module, the second display module, and the third display module.

The first display module is a display disposed in front of the steering wheel and on the vehicle front side, and is typically a meter panel in which a speedometer is disposed. The second display module and the third display module are a pair of displays disposed at positions on both sides of the steering wheel. The second display module and the third display module may be configured to allow touch operation with a touch panel. The first display module, the second display module, and the third display module may be disposed at positions in contact with each other, or may be arranged separately from each other.

In addition, the second and third display modules may be disposed at positions protruding more toward the rear of the vehicle than the first display module in the front and rear (longitudinal) direction of the vehicle, that is, at positions closer to the driver. Also, the second and third display modules may be disposed closer to the vehicle front side than a grip portion of the steering wheel in the front and rear direction of the vehicle. Note that the steering wheel does not necessarily have to be circular as long as it has a grip portion and is rotated to perform a steering operation.

The controller performs independent display control on the first display module, the second display module, and the third display module. For example, the controller may output, to the first display module, information that is always required by the driver, such as the speed of the vehicle, the number of engine revolutions, and the remaining amount of the battery, and may output, to the second and third display modules, information related to the control of the vehicle or information related to the convenience of the occupant.

Further, in a case where a notification (e.g., a warning or the like) with a priority equal to or higher than a predetermined value is generated for the occupant of the vehicle, the controller performs display control related to the notification (e.g., control of integrally outputting an image for notification) using a virtual screen disposed across the first display module, the second display module, and the third display module. According to such a configuration, the desired information can be reliably transmitted even if the driver is gazing at any display module.

Note that the in-vehicle system may further include a storage module configured to store a corresponding image for each of a plurality of notifications. In addition, each of the images may include a first region, a second region, and a third region, and the controller may output the first region of an image to be output to the first display module, the second region thereof to the second display module, and the third region thereof to the third display module. According to such a configuration, it is possible to display one image in an integrated manner by using the three display modules. Note that the divided regions of the image may include different contents.

In addition, the first display module, the second display module, and the third display module may be a plurality of displays arranged in a straight line. By arranging the three independent display modules in a straight line, it is possible to provide a display with less discomfort.

Note that the first through third display modules do not necessarily need to be independent displays. For example, the first through third display modules may be display regions arranged on a single display device in a straight line.

Hereinafter, embodiments of the present disclosure will be described based on the accompanying drawings. The configurations of the following embodiments are examples, and the present disclosure is not limited to the configurations of the embodiments.

### (First Embodiment)

An overview of a vehicle system according to a first embodiment will be described. The vehicle system according to the present embodiment is configured to include a vehicle 1.

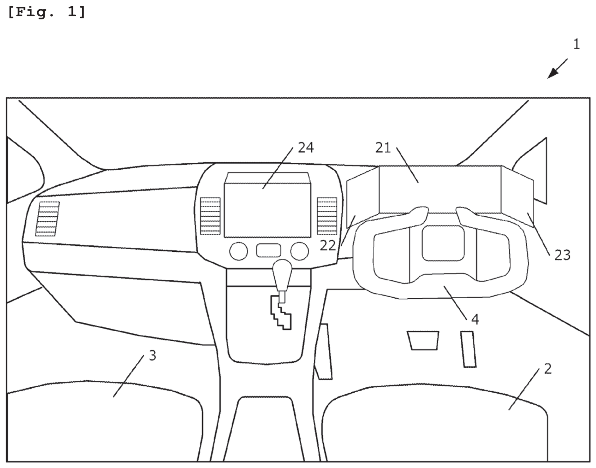

The vehicle 1 will be described with reference to FIG. 1. FIG. 1 is a view illustrating a passenger compartment of the vehicle 1. As illustrated in FIG. 1, a driver's seat 2 and a front passenger seat 3 are provided in the passenger compartment of the vehicle 1. Note that the vehicle 1 of the present embodiment is a right-hand drive vehicle, and a driver's seat 2 is provided on the right side of the vehicle 1.

A steering wheel 4 is disposed on the forward side of the driver's seat 2. The steering wheel 4 may be circular or may be U-shaped (a so-called irregular steering wheel), as illustrated.

The steering wheel 4 is connected to a steering device of the vehicle 1 via a steering column. The steering column is covered by a column cover.

The passenger seat 3 is provided on the left side of the driver's seat 2, and a center display 24 is disposed on the vehicle front side at an intermediate position between the driver's seat 2 and the passenger seat 3. The center display 24 displays, for example, auxiliary information such as car navigation, or contents related to entertainment such as audio and television.

A meter display 21 is provided on the vehicle front side of the steering wheel 4. The meter display 21 is a fullscreen display that is positioned in front of the driver's seat 2 to provide various types of information to the driver of the vehicle 1. The meter display 21 displays information necessary for driving the vehicle such as, for example, a speed of the vehicle (vehicle speed), an engine speed (if the vehicle 1 has an engine), a charge and discharge condition (if the vehicle 1 has a drive battery), and a travel distance. The meter display 21 is an example of a "first display" in the present disclosure.

In addition, a pair of display devices are provided on both sides of the meter display 21. The pair of display devices are connected to a left end and a right end of the meter display 21, respectively, and the left and right displays are provided so as to be located on both sides of the steering wheel 4.

In the present embodiment, of the pair of display devices, the display disposed closer to the inner side of the vehicle is referred to as an inner display, and the display disposed closer to the outer side of the vehicle is referred to as an outer display. An inner display 22 is an example of a "second display" in the present disclosure, and an outer display 23 is an example of a "third display" in the present disclosure.

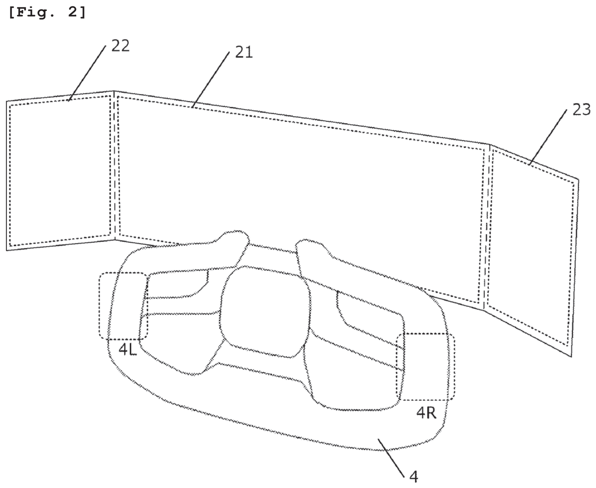

Referring to FIG. 2, the detailed structures of the inner display 22 and the outer display 23 will be described. The inner display 22 and the outer display 23 are vertically long displays, and are each connected to the meter display 21. The outer display 23 is connected to the right end of the meter display 21 when facing the vehicle front side, and the inner display 22 is connected to the left end of the meter display 21 when facing the vehicle front side. Accordingly, the display screens can be located in the vicinity of grip portions of the steering wheel 4.

Here, note that the above description is an example in the case where the vehicle 1 is a right-hand drive vehicle, whereas in the case where the vehicle 1 is a left-hand drive vehicle, the left and right sides are reversed. That is, the outer display 23 is connected to the left end of the meter display 21 when facing the front side of the vehicle, and the inner display 22 is connected to the right end of the meter display 21 when facing the front side of the vehicle.

The inner display 22 and the outer display 23 are angled with respect to the left and right direction of the steering wheel 4, and are each disposed so as to be inclined toward the steering wheel side. That is, the inner display 22 is disposed to protrude more toward the rear of the vehicle 1 the more it is inside the vehicle 1, and the outer display 23 is disposed to protrude more toward the rear of the vehicle 1 the more it is outside the vehicle 1. In this manner, the inner display 22 and the outer display 23 are each disposed so as to face the driver.

An area 4R indicated by a broken line in FIG. 2 is a portion (grip portion) where the steering wheel 4 is gripped or held by the right hand, and an area 4L indicated by a broken line in FIG. 2 is a portion (grip portion) where the steering wheel 4 is gripped or held by the left hand. By forming the support portion 5 in the above-described shape, the positions of the inner display 22 and the outer display 23 in a vehicle front and rear direction can be brought closer to the grip portions of the steering wheel 4. Therefore, it is possible to further reduce the amount of hand movement when the driver performs a touch operation on the inner display 22 or the outer display 23 during driving.

In the example of FIG. 2, the meter display 21, the inner display 22, and the outer display 23 are assumed to be independent display devices, but the form shown in FIG. 2 may be realized by a single display device. For example, a bent or curved display device that is long in the horizontal direction may be divided into three areas, each of which may function as the meter display 21, the inner display 22, and the outer display 23, respectively.

### [System Configuration]

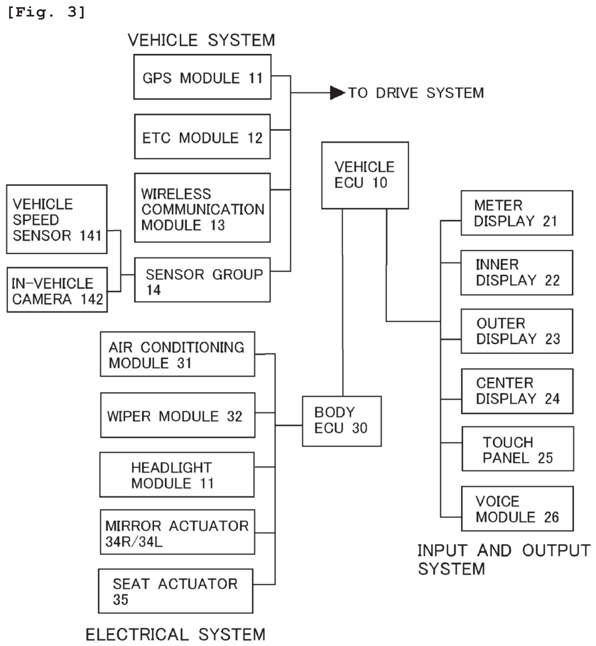

Next, the configuration of each device or component constituting the vehicle system of the vehicle 1 will be described. First, the components of the vehicle 1 will be described. FIG. 3 is a diagram schematically illustrating an example of the configuration of the vehicle 1. The vehicle 1 is configured to include the vehicle system, an electrical system, and an input and output system.

The vehicle system is a system that controls the motion of the vehicle 1. The vehicle system includes a plurality of components related to the travel of the vehicle 1. The input and output system is a system that provides information to the occupant (driver) of the vehicle 1 and obtains an input from the occupant. The input and output system includes a plurality of components for inputting and outputting information. The electrical system is a system that controls electrical equipment that the body of the vehicle has. The electrical system includes a plurality of components related to electrical equipment that the body of the vehicle has. The components included in each system may include a plurality of electrical equipment and an ECU that controls the electrical equipment.

A vehicle ECU 10 and a body ECU 30 may be configured as a computer including a processor (a CPU, a GPU, or the like), a main storage device (a RAM, a ROM, or the like), and an auxiliary storage device (an EPROM, a hard disk drive, a removable medium, or the like). An operating system (OS), various programs, various tables, etc., are stored in the auxiliary storage device, and by executing the programs stored therein, it is possible to realize each function (software module) that meets a predetermined purpose, as will be described later. However, some or all of the functions may be realized as a hardware module by a hardware circuit such as, for example, an ASIC, an FPGA or the like.

The vehicle ECU 10 is connected to a plurality of components related to the travel of the vehicle.

A GPS module 11 is a module for obtaining position information of the vehicle 1. The GPS module 11 includes a GPS antenna and a positioning module for measuring the position information. The GPS antenna is an antenna that receives positioning signals transmitted from positioning satellites (also referred to as GNSS satellites). The positioning module is a module that calculates the position information based on the signals received by the GPS antenna.

An ETC (Electronic Toll Collection System) module 12 is a module for collecting tolls on toll roads via wireless communication. The ETC module 12 is configured to include an antenna and a communication module.

A wireless communication module 13 includes an antenna and a communication module for performing wireless communication. The antenna is an antenna element for inputting and outputting radio or wireless signals. **In** the present embodiment, the antenna is suitable for mobile communication (e.g., mobile communication such as 3G, 4G, 5G, etc.). Note, that the antenna may be configured to include a plurality of physical antennas. The communication module is a module for performing mobile communication. In addition, the wireless communication module 13 may include a communication module other than the communication module for mobile communication. For example, the wireless communication module 13 may include a communication module based on Bluetooth (registered trademark) communication. This makes it possible to establish a wireless connection with a user terminal in the vehicle, and to provide services in cooperation with the user terminal (e.g., hands-free calling).

The sensor group 14 is a set of a plurality of sensors for obtaining sensor data used in driving the vehicle. The sensors may obtain physical quantities or may obtain image data or the like. In the present embodiment, a sensor for detecting a vehicle speed (vehicle speed sensor 141) and an image sensor for obtaining an image in front of the vehicle (in-vehicle camera 142) are exemplified as the sensors. Here, note that the vehicle ECU 10 may be further connected to components belonging to a drive system (i.e., an engine, a motor, a battery, a transmission, and the like).

The body ECU 30 is connected to a plurality of electrical components included in the body of the vehicle 1. In the present embodiment, examples of the electrical components provided on the body of the vehicle 1 include a car air conditioner, wipers, headlights, side mirrors, and an electric seat.

An air conditioning module 31 is the car air conditioner of the vehicle 1. The air conditioning module 31 includes, for example, a cooling module, a heating module, a compressor, a condenser, and the like. Also, the air conditioning module 31 may include a controller for controlling these components.

A wiper module 32 includes front wipers, rear wipers, motors for driving these wipers, and the like.

A headlight module 33 includes headlights of the vehicle 1 and a module for driving the headlights. The headlights are configured to be switchable between a high beam and a low beam, for example. If the headlights of the vehicle 1 are adaptive headlights, light illumination can also be controlled based on commands from the body ECU 30. The headlight module 33 may further include tail lights, stop lights, turn signals, and/or modules to drive them.

A mirror actuator 34 includes a drive module for driving side mirrors disposed on the left and right of the vehicle 1. The angles of the side mirrors can be adjusted upward, downward, leftward, and rightward by the mirror actuator 34.

A seat actuator 35 includes a drive module for adjusting the position of a seat provided in the vehicle 1. By the seat actuator 35, the positions, heights, angles, etc., of the seat surface and the backrest can be adjusted.

Next, a device for inputting and outputting information will be described. In the present embodiment, the vehicle 1 includes four displays for outputting information, i.e., the meter display 21, the inner display 22, the outer display 23, and the center display 24.

The meter display 21 is a display disposed in front of the driver, and outputs information related to the vehicle 1. On the meter display 21, information related to the state of the vehicle such as, for example, a vehicle speed, an engine speed, a remaining fuel amount, a remaining battery amount, a charge and discharge condition, and a travel distance is mainly output, but other information may also be output.

The inner display 22 and the outer display 23 are displays having touch panels disposed on both sides of the steering wheel. As described above, the inner display 22 is disposed on the center side of the vehicle, and the outer display 23 is disposed on the outer side of the vehicle. In a case where the vehicle 1 is a right-hand drive vehicle, the inner display 22 is disposed on the left side in the traveling direction of the vehicle, and the outer display 23 is disposed on the right side in the traveling direction of the vehicle. However, in a case where the vehicle 1 is a left-hand drive vehicle, the inner display 22 is disposed on the right side in the traveling direction of the vehicle, and the outer display 23 is disposed on the left side in the traveling direction of the vehicle.

The center display 24 is a display disposed in the center of the vehicle. The center display 24 is disposed in a place where a display of a car navigation device was conventionally disposed. The center display 24 displays, for example, auxiliary information such as car navigation, or contents related to entertainment such as audio and television.

A touch panel 25 is a module for detecting a touch operation performed on a corresponding display described above. **In** the present embodiment, the inner display 22, the outer display 23, and the center display 24 each have the touch panel 25, and can be operated by touch. The touch panel 25 detects a touch operation performed on the corresponding display, and transmits the detected contents to the vehicle ECU 10.

A voice module 26 is a module that inputs and outputs information by voice. The voice module 26 may include, for example, a speaker and a microphone.

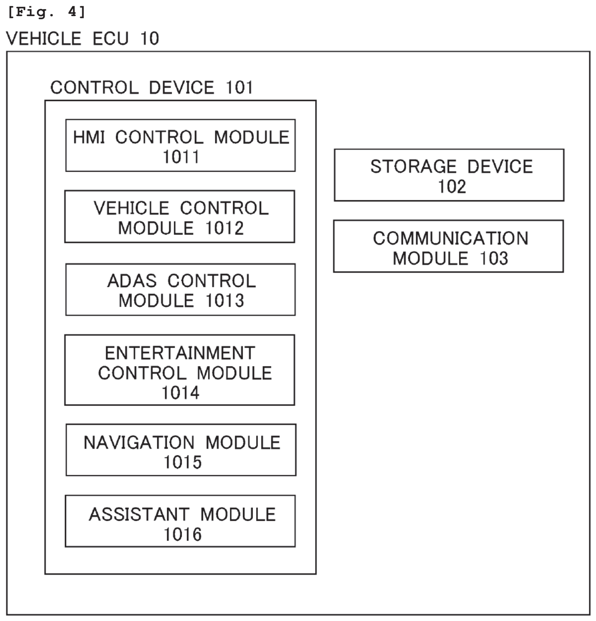

Next, a detailed configuration of the vehicle ECU 10 will be described. The vehicle ECU 10 is connected to the vehicle system and the drive (powertrain) system, thereby controlling the vehicle 1. In addition, the vehicle ECU 10 has a function of inputting and outputting information by components included in the input and output system, and a function of controlling the electrical system via the body ECU 30 that controls the electrical system. FIG. 4 is a diagram illustrating the detailed configuration of the vehicle ECU 10.

The vehicle ECU 10 is configured to include a control device 101, a storage device 102, and a communication module 103.

The control device 101 is an arithmetic module that realizes various functions of the vehicle ECU 10 by executing a predetermined program. The control device 101 can be realized by, for example, a hardware processor such as a CPU or the like. Also, the control device 101 may be configured to include a RAM, a ROM (Read Only Memory), a cache memory, etc.

In the present embodiment, the control device 101 of the vehicle ECU 10 is configured to have six software modules: an HMI control module 1011, a vehicle control module 1012, an ADAS control module 1013, an entertainment control module 1014, a navigation module 1015, and an assistant module 1016. Each software module may be realized by executing a program stored in the storage device 102 to be described later by the control device 101 (CPU or the like). Information processing executed by the software modules is synonymous with information processing executed by the control device 101 (CPU or the like).

The HMI control module 1011 generates a user interface for controlling various components included in the vehicle, and provides the user interface to the occupant of the vehicle via the input and output system. In addition, the HMI control module 1011 passes information input via the input and output system (e.g., commands for realizing the control specified by the user) to the corresponding software module or the like. This allows any component in the vehicle to be controlled via the user interface.

Here, note that in the following description, commands generated by the user for controlling components of the vehicle 1 will be referred to as "user commands". For example, a command to change the temperature of the air conditioner, a command to change the drive mode, a command to make a phone call, a command to play music, etc., are examples of the "user commands".

Note that the components included in the vehicle may be electrical equipment such as headlights and wipers. Also, the components of the vehicle may be an in-vehicle computer or software modules (e.g., autonomous driving software, navigation software, etc.) that are executed by the in-vehicle computer.

Note that the HMI control module 1011 selects the output destination of the user interface from among the plurality of displays (the meter display 21, the inner display 22, the outer display 23, and the center display 24) depending on the type of the component to be controlled. A specific configuration thereof will be described later.

The vehicle control module 1012 controls the components included in the vehicle system or the components included in the drive system. The vehicle control module 1012 may control a target component (e.g., a drive motor) based on a command (e.g., an acceleration command) received from another component (e.g., the ADAS control module 1013 to be described later), or may control a target component (e.g., a headlight module) based on a user command (e.g., a command to turn on the headlights) obtained via the HMI control module 1011.

The ADAS control module 1013 controls an advanced driver-assistance system. For example, the ADAS control module 1013 generates a control command for the vehicle based on sensor information obtained from the in-vehicle sensors included in the sensor group 14, thereby realizing driving assistance such as cruise control, pre-crash safety, and lane keeping assist. The ADAS control module 1013 controls the vehicle system and the drive system by transmitting control commands to the vehicle control module 1012, for example.

The entertainment control module 1014 performs control related to the entertainment provided to the occupant of the vehicle. As functions related to the entertainment, for example, there can be exemplified an audio function, a television/radio function, and the like.

The navigation module 1015 provides a car navigation function. The navigation module 1015 can generate and provide route guidance for the vehicle based on the position information obtained from the GPS module 11 and the traffic information obtained from the wireless communication module 13. The navigation module 1015 may, for example, accept the designation of vehicle destinations and transit points via the HMI control module 1011, and may also output information about the route generated.

The assistant module 1016 provides information to the occupant of the vehicle by executing a language model that allow dialogue in natural language. The language model may be, for example, a large language model (LLM). For example, by executing a LLM having information about the occupant of the vehicle, it is possible to provide information in natural language. Note that in a case where there are a plurality of occupants of the vehicle, the assistant module 1016 may obtain a language model corresponding to each person via a network and execute an optional language model.

The storage device 102 is a means or module for storing information, and is composed of a storage medium such as a RAM, a magnetic disk, a flash memory or the like. The storage device 102 stores programs to be executed by the control device 101, data to be used by the programs, etc.

The communication module 103 is a communication interface for connecting the vehicle ECU 10 to a vehicle network. The communication module 103 is configured to be able to communicate with components of the vehicle 1 via a network such as a controller area network (CAN) or the like.

Here, note that the specific configuration of the vehicle ECU 10 may include omission, replacement, and addition of components as appropriate, depending on its implementation. For example, the control device 101 may include a plurality of hardware processors. The hardware processors may each be composed of a microprocessor, an FPGA, a GPU, or the like. In addition, input and output devices (e.g., an optical drive and the like) other than those illustrated may be added. Also, the vehicle ECU 10 may be composed of a plurality of computers. In this case, the hardware configurations of the respective computers may or may not match each other.

### [Interface Screen Provided by HMI Control Unit]

Next, the user interface provided by the HMI control module 1011 will be described.

The HMI control module 1011 can generate a plurality of types of graphical user interface (GUI) screens and output the screens via the plurality of displays described above. In the present embodiment, the HMI control module 1011 collects the information related to the control of the vehicle on the outer display 23, also collects the information related to the convenience and comfort of the occupant on the inner display 22, and outputs the information thus collected. Accordingly, the occupant of the vehicle 1 can intuitively recognize which of the left and right sides the desired information is output to. Further, the operation surfaces of the touch panels included in the inner display 22 and the outer display 23 are disposed in the vicinity of the steering wheel. This can minimize the amount of eye and hand movement required by the driver of the vehicle.

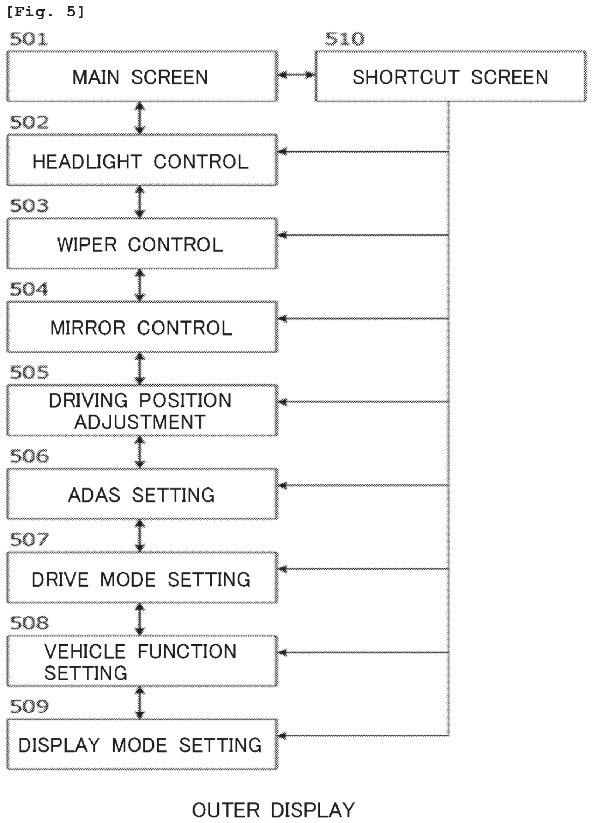

The HMI control module 1011 can switch between a plurality of types of screens output to the outer display 23. FIG. 5 is a diagram illustrating transitions between the plurality of types of screens output to the outer display 23. As illustrated in the figure, the HMI control module 1011 can output a plurality of screens, centered around a main screen 501, to the outer display 23.

### (1) Main Screen 501

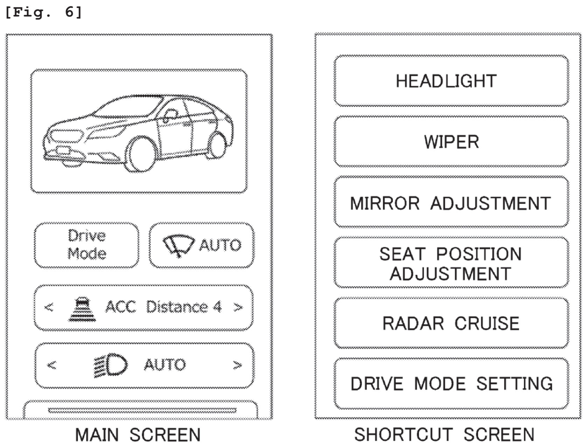

The main screen 501 is a screen that is normally displayed on the outer display during traveling. A diagram on the left side in FIG. 6 is a diagram illustrating an example of the main screen 501. The display contents of the main screen can be customized by the user.

### (2) Headlight Control Screen 502

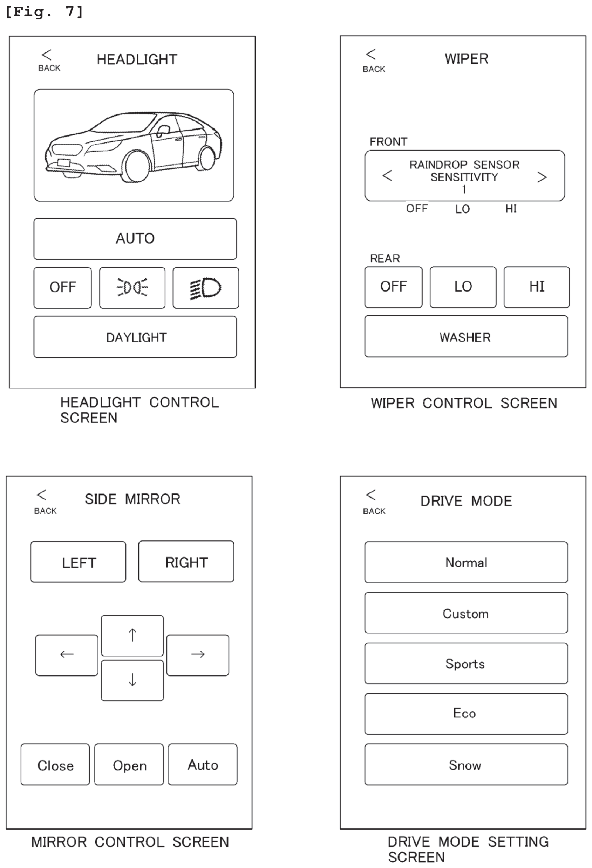

A headlight control screen 502 is a screen for setting the lighting state of the headlights included in the vehicle. A upper diagram on the left side in FIG. 7 is a diagram illustrating an example of the headlight control screen 502. The headlight control screen 502 allows the user to select the lighting state of the headlights (automatic, on, off, small light, daylight, etc.). The vehicle control module 1012 generates a user command based on the touch operation obtained via the HMI control module 1011, and transmits the user command to the body ECU 30 to control the headlight module 33. In addition, the vehicle control module 1012 may obtain data indicating the lighting state of the headlights from the body ECU 30 to reflect the lighting state on the screen via the HMI control module 1011. For example, the vehicle control module 1012 may reflect the current lighting state of the headlights on the graphic of the vehicle drawn on the screen.

### (3) Wiper Control Screen 503

A wiper control screen 503 is a screen for setting the operation state of the wipers (front and rear) of the vehicle 1. A upper diagram on the right side in FIG. 7 is a diagram illustrating an example of the wiper control screen 503. The wiper control screen 503 allows the user to select the operation state of the wipers (stop, automatic operation, intermittent operation, continuous operation, etc.). The vehicle control module 1012 generates a user command based on the touch operation obtained via the HMI control module 1011, and transmits the user command to the body ECU 30 to control the wiper module 32. In addition, the vehicle control module 1012 may obtain data indicating the operation state of the wipers from the body ECU 30 to reflect the operation state on the screen via the HMI control module 1011. For example, the vehicle control module 1012 may reflect the current operation state of the wipers on the graphic of the vehicle drawn on the screen.

### (4) Mirror Control Screen 504

A mirror control screen 504 is a screen for adjusting the deployment state and angle of the side mirrors included in the vehicle 1. A lower diagram on the left side in FIG. 7 is a diagram illustrating an example of the mirror control screen 504. The mirror control screen 504 allow the user to select the state (retracted/deployed state and angle) of each side mirror. The vehicle control module 1012 generates a user command based on the touch operation obtained via the HMI control module 1011, and transmits the user command to the body ECU 30 thereby to control the mirror actuator 34. In addition, the vehicle control module 1012 may obtain data indicating the operation state of each side mirror from the body ECU 30 thereby to reflect the operation state on the screen via the HMI control module 1011. For example, the vehicle control module 1012 may reflect the current deployed/retracted state of each side mirror on the graphic of the vehicle drawn on the screen.

### (5) Driving Position Adjustment Screen 505

A driving position adjustment screen 505 is a screen for adjusting the position and angle of a seat (a seat surface and a backrest) included in the vehicle 1 and the position and angle of the steering wheel. The driving position adjustment screen 505 allows the user to set the position and angle of the seat and the steering wheel. The vehicle control module 1012 obtains a touch operation via the HMI control module 1011, generates a user command based on the touch operation, and transmits the user command to the body ECU 30 to control the seat actuator 35 and the like.

### (6) ADAS Setting Screen 50

An ADAS setting screen 50 is a screen for notifying and setting an operation status of an advanced driver-assistance system included in the vehicle. For example, in a case where the advanced driving support system of the vehicle 1 includes an autocruise function, the user of the vehicle 1 can set a cruising speed, an inter-vehicle distance, whether or not to follow a preceding vehicle, whether or not to trace a lane, etc., via the ADAS setting screen 506. The information included in the ADAS setting screen 506 can be generated by the ADAS control module 1013.

### (7) Drive Mode Setting Screen 507

A drive mode setting screen 507 is a screen for setting the drive mode of the vehicle 1. A lower diagram on the right side in FIG. 7 is a diagram illustrating an example of the drive mode setting screen 507. For example, the user of the vehicle 1 can select a mode from a plurality of modes such as a normal mode, a sport mode, an eco mode, a snow mode, etc., via the drive mode setting screen 507. The vehicle control module 1012 changes the drive mode of the vehicle based on the selection.

### (8) Vehicle Function Setting Screen 508

A vehicle function setting screen 50 is a screen for using other functions of the vehicle 1. The other functions of the vehicle 1 include, for example, opening and closing an electric back door, adjusting a suspension, and the like.

### (9) Display Mode Setting Screen 509

A display mode setting screen 509 is a screen for setting the type of information to be displayed on the meter display 21. For example, in a case where a plurality of pieces of information other than the speed can be displayed on the meter display 21, the user of the vehicle 1 can customize the information to be displayed on the meter display 21 via the display mode setting screen 509.

The plurality of screens as exemplified above can be switched, for example, by performing a predetermined operation such as a left or right swipe on the touch panel provided on the outer display 23. Further, the HMI control module 1011 can display on the outer display 23 a shortcut screen 510 for jumping to each screen. A diagram on the right side in FIG. 6 is a diagram illustrating an example of the shortcut screen 510. The shortcut screen can be called, for example, by performing a predetermined operation (e.g., an operation of swiping upward from the bottom of the screen) on each screen including the main screen 501. On the shortcut screen 510, a plurality of interfaces (e.g., buttons) for transition to each screen are arranged, so that it is possible to move to a target screen by performing operations on the interfaces.

In this way, the HMI control module 1011 collects and outputs at least information related to the control of the vehicle to the outer display 23. The information related to the control of the vehicle is typically information related to the travel control of the vehicle. Examples of the information related to the travel control of the vehicle include information for controlling components belonging to the vehicle system, information for controlling components belonging to the drive system, etc. In addition, among the components belonging to the electrical system, information for controlling components necessary for the vehicle to appropriately travel, such as lights and wipers, can also be considered information related to the travel control of the vehicle. Note that information that is not directly related to the travel control of the vehicle may be output to the outer display 23 as long as the information is related to the control of the vehicle. For example, information for controlling an electric door of the vehicle may be output to the outer display 23.

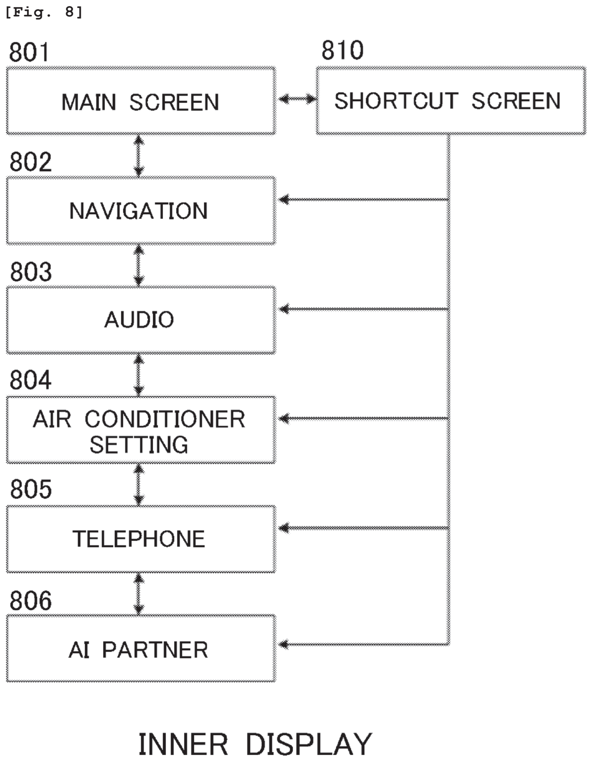

The HMI control module 1011 can switch between a plurality of types of screens output to the inner display 22. FIG. 8 is a diagram illustrating transitions between the plurality of types of screens output to the inner display 22. As illustrated in the figure, the HMI control module 1011 can output the plurality of screens, centered around a main screen 801, to the inner display 22.

### (1) Main Screen 801

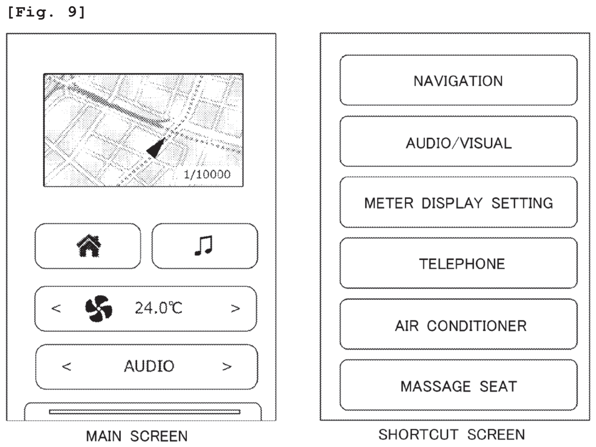

The main screen 801 is a screen that is normally displayed on the inner display during traveling. A diagram on the left side in FIG. 9 is a diagram illustrating an example of the main screen 801. The display contents of the main screen can be customized by the user.

### (2) Navigation Screen 802

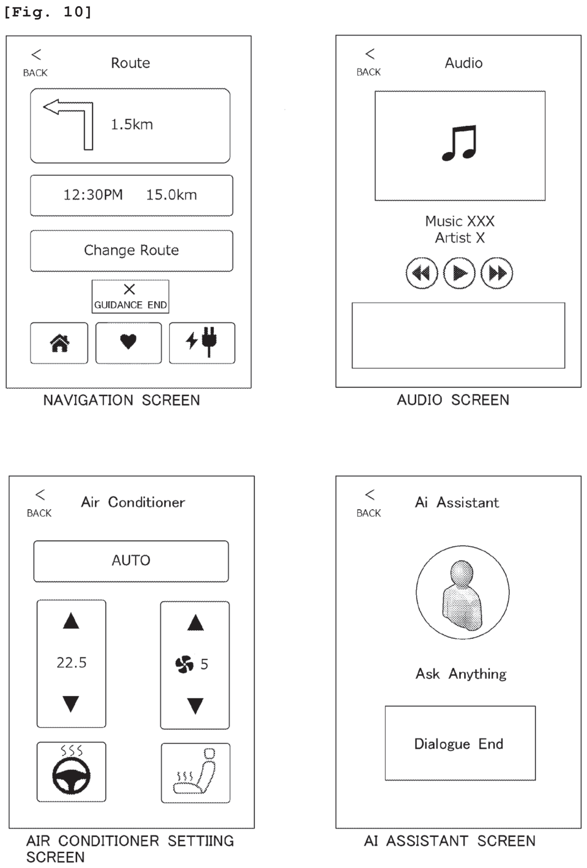

A navigation screen 1002 is a screen that is related to car navigation. A upper diagram on the left side in FIG. 10 is a diagram illustrating an example of the navigation screen 802. The information included in the navigation screen 802 is generated by the navigation module 1015. Note that in a case where map information in the car navigation is displayed on the center display 24, auxiliary information about the route of the vehicle 1 may be output on the navigation screen 802. As the auxiliary information about the route, for example, guidance of a point where a right or left turn or the like is performed next, an estimated time of arrival, a remaining distance, and so on can be exemplified.

In addition, the navigation screen 802 may include a part of the information and the user interface displayed on the center display 24. For example, frequently used user interfaces, such as a button to start route guidance to home, a button to call a bookmark, a button to start route guidance to a charging spot, etc., can be placed on the navigation screen 802.

### (3) Audio Screen 803

An audio screen 1003 is a screen related to an audio function of the vehicle 1. A upper diagram on the right side in FIG. 10 is a diagram illustrating an example of the audio screen 803. The information included in the audio screen 803 is generated by the entertainment control module 1014. The entertainment control module 1014 can obtain and play songs via a network or a medium. The audio screen 803 can include information about the song being played and an interface for selecting a song.

### (4) Air Conditioner Setting Screen 804

An air conditioner setting screen 1004 is a screen for controlling the car air conditioner of the vehicle 1. A lower diagram on the left side in FIG. 10 is a diagram illustrating an example of the air conditioner setting screen 804. On the air conditioner setting screen 804, it is possible to set the temperature and air volume of the car air conditioner and air conditioning devices to be operated (a steering heater, a seat heater, a defroster, and the like). The vehicle control module 1012 generates a user command based on an operation performed on the screen, and transmits the user command to the body ECU 30 to control the air conditioning module 31 and the like. Note that the car air conditioner is equipment of the vehicle 1 controlled by commands from the outside, but since it is related to the comfort of the occupant, the air conditioner setting screen 804 is displayed on the inner display 22 instead of the outer display 23.

### (5) Telephone Screen 805

A telephone screen 1005 is a screen for wirelessly connecting to a user terminal to make hands-free calls. In a case where the wireless communication module 13 has a module for wireless communication with a user terminal, a call from (or an incoming call to) the user terminal can be made via the module.

### (6) AI Partner Screen 806

An AI partner screen 1006 is a screen for interacting with a virtual agent (AI partner) capable of natural language interaction. A lower diagram on the right side in FIG. 10 is a diagram illustrating an example of the AI partner screen 806. The screen includes a virtual agent character, and the occupant of the vehicle can obtain information by interacting with the character. Natural language dialogue service is provided by the assistant module 1016. The AI partner screen 806 may include an interface for giving instructions to the agent. Note that in a case where there are a plurality of occupants in the vehicle, the assistant module 1016 may be configured to be able to execute an optional agent corresponding to each person. The AI partner screen 806 may include an interface for starting and ending interaction with the agent, an interface for replacing the agent, and the like.

The plurality of screens as exemplified above can be switched, for example, by performing a predetermined operation such as a left or right swipe on the touch panel provided on the inner display 22. Further, the HMI control module 1011 can display on the inner display 22 a shortcut screen 810 for jumping to each screen. A diagram on the right side in FIG. 9 is a diagram illustrating an example of the shortcut screen 810. The shortcut screen can be called, for example, by performing a predetermined operation (e.g., an operation of swiping upward from the bottom of the screen) on each screen including the main screen 801. On the shortcut screen 810, a plurality of interfaces (e.g., buttons) for transition to each screen are arranged, so that it is possible to move to a target screen by performing operations on the interfaces.

In this way, the HMI control module 1011 collects and outputs information related to the convenience and comfort of the occupants on the inner display 22.

Note that information about components that are part of the vehicle, such as the car air conditioner, but are related to the convenience or comfort of the occupants, may be output to the inner display 22 without being treated as information related to the control of the vehicle. In this manner, in the case where the target information corresponds to both the information related to the control of the vehicle and the information related to the convenience (or comfort) of the occupants, the target information may be selectively output to either the inner display 22 or the outer display 23 in accordance with predetermined criteria.

In addition, apart from the above description, the HMI control module 1011 may output predetermined information to the center display 24. For example, the information generated by the entertainment control module 1014 and the navigation module 1015 can be output not only to the inner display 22 but also to the center display 24.

### [Interrupt Display on Interface Screen]

Next, an interrupt display will be described. While the vehicle 1 is traveling, various components of the vehicle 1 may generate notifications to the occupants. For example, in a case where the vehicle 1 is connected to a user terminal, it is necessary to notify the user of an incoming call as necessary. In addition, if any event (e.g., a request for handover from autonomous driving to manual driving) occurs while the ADAS function is being used, this needs to be notified. When a request to perform such a notification (hereinafter, notification request) is generated from a component included in the vehicle 1, the HMI control module 1011 performs an interruption display using any (or all) of the meter display 21, the inner display 22, and the outer display 23.

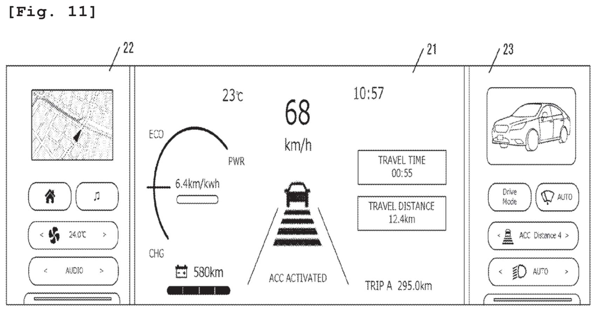

Here, an example of the interrupt display will be described. FIG. 11 is a diagram illustrating an example of display contents of the meter display 21, the inner display 22, and the outer display 23 in a normal state (a situation in which a notification with a priority equal to or higher than a predetermined value has not occurred; also referred to as a first situation). As illustrated in the figure, the meter display 21 mainly outputs information related to the state of the vehicle, such as vehicle speed, engine RPM, remaining fuel level, remaining battery level, charging/discharging status, and travel distance (mileage). In addition, information related to the convenience and comfort of the occupants is output to the inner display 22, as described with reference to FIG. 9. Also, information related to the control of the vehicle is output to the outer display 23, as described with reference to FIG. 6.

In the vehicle ECU 10 according to the present embodiment, a plurality of notifications are defined, and different priorities are assigned to the respective notifications. In addition, when a notification is generated, the HMI control module 1011 displays an image (interrupt display) in a different way according to the priority of the notification.

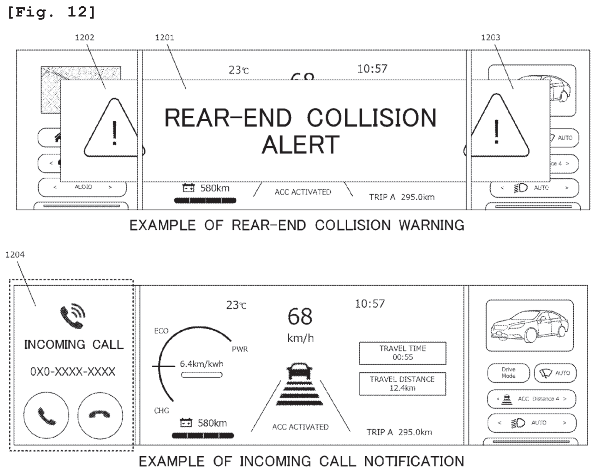

A upper diagram in FIG. 12 is an example of an interrupt display that is output when a notification (rear-end collision warning) with a priority exceeding a predetermined value is generated. The exemplary display is output when the ADAS control module 1013 determines that the vehicle is approaching too close to a preceding vehicle and there is a risk of collision. As illustrated in the figure, in the present embodiment, when a notification is generated with a priority exceeding the predetermined value, an image extending over three displays is displayed.

As illustrated in the figure, the image that is output when a notification is generated whose priority exceeds the predetermined value is an image extending over three of the meter display 21, the inner display 22, and the outer display 23. The image includes three regions, i.e., a first region 1201 output to the meter display 21, a second region 1202 output to the inner display 22, and a third region 1203 output to the outer display 23. In addition, the storage device 102 stores a set of such images for each notification.

Upon receiving a notification request for a notification with a priority equal to or higher than the predetermined value, the HMI control module 1011 obtains a set of images corresponding to the notification from the storage device 102. In addition, the HMI control module 1011 performs control of outputting, among a plurality of regions constituting the images, a first region 1201 to the meter display 21, a second region 1202 to the inner display 22, and a third region 1203 to the outer display 23. This control can be said to be a control that forms a single virtual screen with the inner display 22, the meter display 21, and the outer display 23, and outputs the images to the screen.

In the present embodiment, as illustrated, one image is configured when the first region, the second region, and the third region are combined together. With this configuration, the driver's line of sight can be naturally directed to the center of the screen at the time of notification.

A lower diagram in FIG. 12 is an example of an interrupt display corresponding to a notification (incoming call notification) with a priority lower than the predetermined value. The exemplified display is output when there is an incoming voice call to a user terminal connected to the vehicle 1. As illustrated in the figure, in the present embodiment, when a notification with a low priority is generated, an image 1204 is displayed on only one display. As illustrated, the image 1204 that is output when the priority of the notification is below the predetermined value is an image that is not divided into a plurality of regions. Note that in the illustrated example, the image is output to the inner display 22, but the output destination of the image may be any one of the meter display 21, the inner display 22, and the outer display 23. The output destination of the image is appropriately selected according to the type of notification.

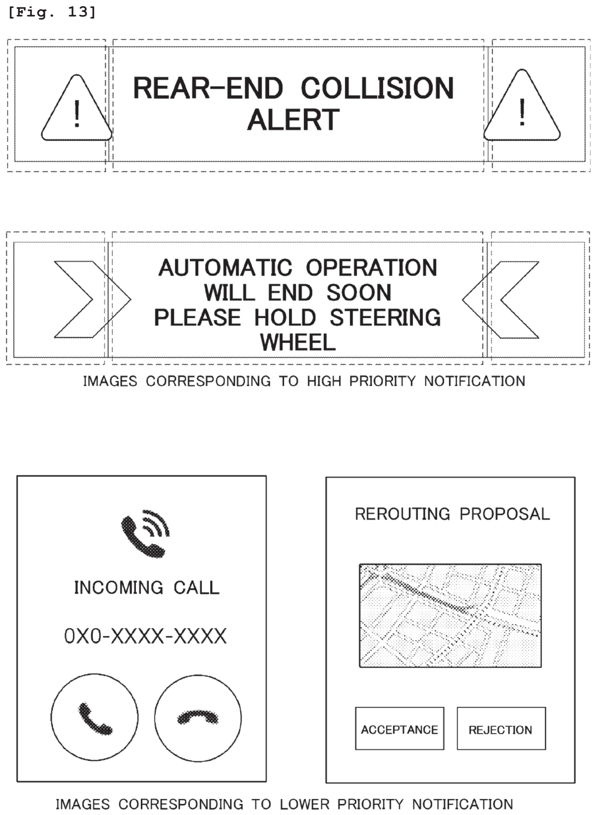

The storage device 102 stores images corresponding to each of a plurality of notifications. A upper diagram in FIG. 13 is an example of images corresponding to a notification whose priority exceeds the predetermined value, and a lower diagram in FIG. 13 is an example of images corresponding to a notification whose priority is below the predetermined value. As notifications whose priority is higher than the predetermined value, for example, there can be mentioned a "rear-end collision warning", a "request to switch to manual operation", an "abnormality occurrence notification", a "lane departure warning", etc. As notifications whose priority is below the predetermined value, for example, there can be mentioned an "incoming call notification", a "route proposal (rerouting or the like)", a "message (e-mail) notification", a "push notification from a user application", etc.

An image corresponding to a notification whose priority exceeds the predetermined value is an image that includes three regions, and an image corresponding to a notification whose priority is below the predetermined value is an image that does not include a plurality of regions. The HMI control module 1011 determines, depending on the priority of the notification, whether to output a corresponding image to a single display or to a virtual screen across three displays, and outputs the corresponding image after obtaining it from the storage device 102. In the latter case, the HMI control module 101 performs control to output the individual regions included in the corresponding image to different displays, respectively, thereby outputting the image to the virtual screen.

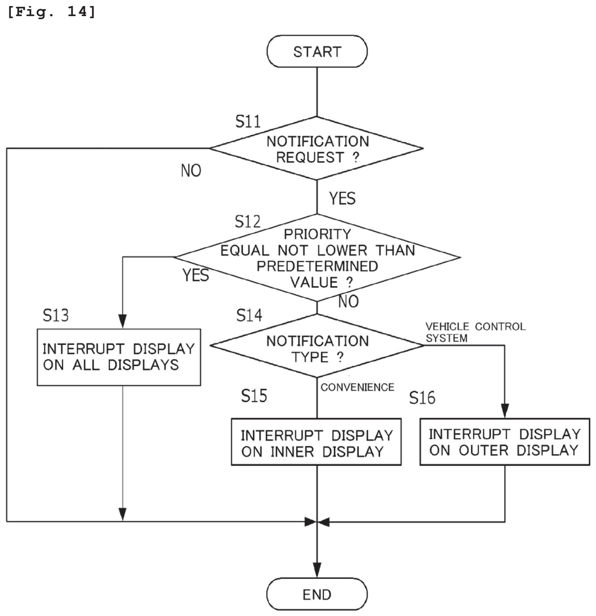

FIG. 14 is a flowchart of a process executed by the HMI control module 1011 when a notification request is generated from various components included in the vehicle 1. The process is periodically executed.

First, in step S11, the HMI control module 1011 determines whether or not a notification request is generated from any of a plurality of components included in the vehicle 1. If a notification request is generated, the processing proceeds to step S12. Whereas, if a notification request is not generated, the processing ends.

In step S12, the HMI control module 1011 determines whether or not the target notification has a priority equal to or higher than the predetermined value. A notification with a priority equal to or higher than the predetermined value can be defined as a notification to be transmitted to the driver in a reliable manner. Examples of the notification to be reliably transmitted to the driver include a request for switching from autonomous driving to manual driving, a notification indicating that an abnormality has occurred in the vehicle, a collision warning, a lane departure warning, and the like, which require immediate handling by the driver.

If an affirmative determination is made in step S12, the processing proceeds to step S13, where the HMI control module 1011 obtains an image corresponding to the notification (i.e., an image including three regions) from the storage device 102, and then performs an interrupt display using all the displays.

If a negative determination is made in step S12 (i.e., if the priority of the notification is lower than the predetermined value), the processing proceeds to step S14. In step S14, the type of notification is determined. If the target notification is a notification from a component related to the control of the vehicle, the processing proceeds to step S16. Whereas, if the target notification is a notification from a component related to the convenience or comfort of the occupants, the processing proceeds to step S15. The criteria for such selection are similar to those described with reference to FIGS. 5 and 8.

**In** step S15, the HMI control module 1011 outputs an image corresponding to the notification via the inner display 20. **In** step S16, the HMI control module 1011 outputs an image corresponding to the notification via the outer display 23. **In** either case, the image to be output is an image that is not divided into a plurality of regions.

Note that, when the notification is output in step S15 or S16, there may be a case where another information is already output on the target display. For example, when the user terminal receives an incoming call, an incoming call notification is output to the inner display 22, but there may be a case where another screen such as an air conditioner setting screen is already displayed on the inner display 22. In this case, the HMI control module 1011 outputs the notification by the following methods.

A first method is to overlay the notification on the screen where the output is already being displayed.

For example, an image notifying that a phone call is being received may be overlaid on an air conditioner setting screen that has already been drawn. In this case, the screen may be switched when the user takes an action in response to the notification, and otherwise, the currently displayed screen may be retained. For example, if the user takes an action to answer the phone call, the air conditioner setting screen may be switched to a phone application, whereas if no action is taken, the air conditioner setting screen may continue to be displayed.

Note that if a notification is made that does not require any action by the user, there is no need to switch the screen.

A second method is to display the notification after switching to an appropriate screen. For example, the air conditioner setting screen that is already displayed may be switched to the phone application, and then an image notifying that a call is coming in may be overlaid. Note that in this case, when the event related to the notification ends, the screen may be returned to the original screen. For example, when a call ends, the phone application may be automatically terminated and the air conditioner setting screen may be displayed again.

As described above, in the first embodiment, the HMI control module 1011 included in the vehicle ECU 10 uses the outer display 23 and the inner display 22 to output various types of information related to the vehicle and its traveling. In particular, the HMI control module 1011 outputs information related to the convenience and comfort of the occupants (second information) via the inner display disposed closer to the inner side of the vehicle, and outputs information related to the control of the vehicle (first information) via the outer display disposed closer to the outer side of the vehicle. According to such a configuration, the driver of the vehicle 1 will be able to intuitively recognize in which direction the information he or she is seeking is output on the display module, thereby minimizing the time during which the driver's attention is directed to the display.

In addition, when a notification is generated whose priority is equal to or higher than the predetermined value, the HMI control module 1011 treats the meter display 21, the inner display 22, and the outer display 23 as a single display, and outputs an image corresponding to the notification in an integrated manner. That is, the HMI control module 10 outputs an image corresponding to the notification on a virtual screen arranged across the three displays. According to such a configuration, even when the driver gazes at any display, it is possible to naturally guide the line of sight of the driver to the meter display 21 thereby to allow the driver to recognize the notification in a reliable manner.

### (Modifications)

The above-described embodiment is merely an example, but the present disclosure can be implemented with appropriate modifications without departing from the spirit thereof. For example, the processing and/or means (devices, modules, etc.) described in the present disclosure can be freely combined and implemented as long as no technical contradiction occurs.

In addition, in the above-described embodiment, when a notification with a priority equal to or higher than the predetermined value is generated, an image is output by treating three displays as one virtual display, but a target image may be divided into three parts, so that the HMI control module 1011 may control the output of each divided image part to each of the three displays. According to such a configuration as well, one image can be displayed on the virtual screen disposed across the three displays.

Moreover, in the above-described embodiment, the form is exemplified in which the meter display 21, the inner display 22, and the outer display 23 are respectively independent of one another, but the respective displays do not necessarily have to be physically independent of one another.

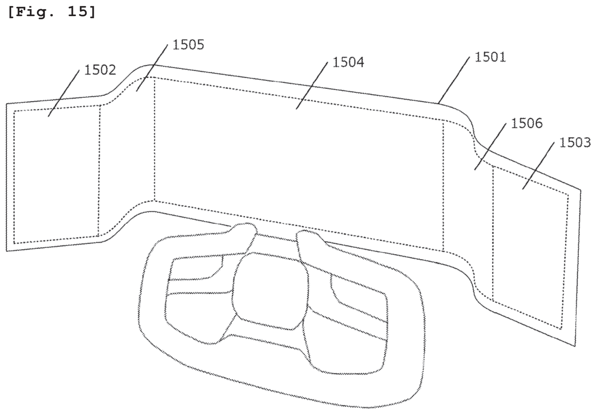

For example, the first display module, the second display module, and the third display module according to the present disclosure may be realized by a single display 1501, as illustrated in FIG. 15. In the example of FIG. 15, the display 1501 includes three display regions (display modules) denoted by reference numerals 1502, 1503, and 1504. The three display regions are each flat, and those portions between the respective display regions are curved.

In the illustrated example, the display region 1502 functions as the inner display 22 (second display module), and the display region 1503 functions as the outer display 23 (third display module) (in the case of a right-hand drive vehicle). In addition, the display region 1504 functions as the meter display 21 (first display module).

A portion (reference numeral 1505) connecting the display regions 1502, 1504 and a portion (reference numeral 1506) connecting the display regions 1503, 1504 can display images, but are not used as display regions in the normal form because they are physically curved and distortions occur. However, if a notification with a priority equal to or higher than the predetermined value is generated, an image may be output to the entire display regions including the curved portions. That is, an image may be output to a virtual screen arranged across all the display regions (five display regions 1502, 1503, 1504, 1505, and 1506) included in the display 1501.

Further, in the above-described embodiment, two types of information, i.e., the information related to the convenience of the occupants and the information related to the comfort of the occupants, are exemplified as the second information, but the second information may be either one of these, or may include other information. Also, in the above-described embodiment, the information related to the control of the vehicle is exemplified as the first information, but the first information may include other information.

In addition, the processing described as being performed by one device or module may be shared and performed by a plurality of devices or modules. Alternatively, the processing described as being performed by different devices or modules may be performed by a single device or module. In a computer system, it is possible to flexibly change the hardware configuration (server configuration) that can achieve each function of the computer system.

The present disclosure can also be realized by supplying to a computer a computer program in which the functions described in the above-described embodiment are implemented, and reading out and executing the program by means of one or more processors included in the computer. Such a computer program may be provided to the computer by a non-transitory computer readable storage medium that can be connected to a system bus of the computer, or may be provided to the computer via a network. The non-transitory computer readable storage medium includes, for example, any type of disk such as a magnetic disk (e.g., a floppy (registered trademark) disk, a hard disk drive (HDD), etc.), an optical disk (e.g., a CD-ROM, a DVD disk, a Blu-ray disk, etc.) or the like, a read only memory (ROM), a random access memory (RAM), an EPROM, an EEPROM, a magnetic card, a flash memory, an optical card, or any type of medium suitable for storing electronic commands or instructions.

### DESCRIPTION OF REFERENCE SIGNS

- 1: vehicle
- 10: vehicle ECU
- 101: control device
- 102: storage device
- 103: communication module
- 21: meter display
- 22: inner display
- 23: outer display
- 24: center display
- 25: touch panel
- 26: voice module
- 30: body ECU

## Claims

1. An in-vehicle system comprising:
a storage module (102) configured to store an image corresponding to a notification with a priority equal to or higher than a predetermined value among a plurality of notifications generated in a vehicle (1), the image including a first region, a second region, and a third region;
a first display module (21) disposed in front of a steering wheel (4) of the vehicle (1) and on a vehicle (1) front side;
a second display module (22) disposed on a side of the steering wheel (4) and closer to an inner side of the vehicle (1) ;
a third display module (23) disposed on a side of the steering wheel (4) and closer to an outer side of the vehicle (1); and
an information processing apparatus (10) having a controller (101) configured to execute:
outputting, under a first situation, different information about the vehicle (1) to the first display module (21), the second display module (22), and the third display module (23), respectively; and
outputting, under a second situation in which a notification with a priority equal to or higher than the predetermined value is generated for an occupant of the vehicle (1), the first region of an image corresponding to the notification to the first display module (21), the second region thereof to the second display module (22), and the third region thereof to the third display module (23), respectively.

2. An in-vehicle system comprising:
a first display module (21) disposed in front of a steering wheel (4) of the vehicle (1) and on a vehicle (1) front side;
a second display module (22) disposed on a side of the steering wheel (4) and closer to an inner side of the vehicle (1) ;
a third display module (23) disposed on a side of the steering wheel (4) and closer to an outer side of the vehicle (1); and
an information processing apparatus (10) having a controller (101) configured to execute:
performing, under a first situation, independent display control on the first display module (21), the second display module (22), and the third display module (23); and
performing, under a second situation in which a notification with a priority equal to or higher than a predetermined value is generated for an occupant of the vehicle (1), display control related to the notification by a virtual screen disposed across the first display module (21), the second display module (22), and the third display module (23).

3. The in-vehicle system according to claim 2, further comprising a storage module (102) configured to store a corresponding image for each of a plurality of notifications.

4. The in-vehicle system according to claim 3, wherein
the image includes a first region, a second region, and a third region; and
the controller (101) outputs the first region of an image to be output to the first display module (21), the second region thereof to the second display module (22), and the third region thereof to the third display module (23).

5. The in-vehicle system according to claim 2, wherein the first display module (21), the second display module (22), and the third display module (23) are a plurality of displays arranged in a straight line.

6. The in-vehicle system according to claim 2, wherein the first display module (21), the second display module (22), and the third display module (23) are display regions arranged on a single display device in a straight line.

7. The in-vehicle system according to claim 2, wherein the second display module (22) and the third display module (23) are disposed at positions protruding more toward a vehicle (1) rear side than the first display module (21) in a front and rear direction of the vehicle (1).

8. The in-vehicle system according to claim 7, wherein the second display module (22) and the third display module (23) are disposed closer to a vehicle (1) front side than a grip portion of the steering wheel (4) in the front and rear direction of the vehicle (1).

9. The in-vehicle system according to claim 2, wherein
the controller (101) is configured to execute:
outputting, via the second display module (22), second information including at least information related to convenience of an occupant of the vehicle (1); and
outputting, via the third display module (23), third information including at least information related to control of the vehicle (1).

10. The in-vehicle system according to claim 9, wherein the information related to control of the vehicle (1) includes information for notifying a state of a component included in the vehicle (1).

11. The in-vehicle system according to claim 9, wherein the information related to convenience of an occupant of the vehicle (1) includes information for providing entertainment to the occupant of the vehicle (1).

12. A vehicle equipped with the in-vehicle system according to any one of claims 1 through 11.

13. An information processing apparatus installed on a vehicle (1) comprising a first display module (21) disposed in front of a steering wheel (4) and on a vehicle (1) front side, a second display module (22) disposed on a side of the steering wheel (4) and on an inner side of the vehicle (1), and a third display module (23) disposed on a side of the steering wheel (4) and on an outer side of the vehicle (1),
the information processing apparatus (10) having a controller (101) configured to execute:
performing, under a first situation, independent display control on the first display module (21), the second display module (22), and the third display module (23); and
performing, under a second situation in which a notification with a priority equal to or higher than a predetermined value is generated for an occupant of the vehicle (1), display control related to the notification by a virtual screen disposed across the first display module (21), the second display module (22), and the third display module (23).
